(19) Europäisches Patentamt

European Patent Office

Office européen des brevets

(11) **EP 1 192 341 B1**

(12) **EUROPÄISCHE PATENTSCHRIFT**

(45) Veröffentlichungstag und Bekanntmachung des Hinweises auf die Patenterteilung:
06.11.2002 Patentblatt 2002/45

(51) Int Cl.⁷: **F02B 51/06**, F02M 27/06

(21) Anmeldenummer: 00943651.0

(86) Internationale Anmeldenummer:
PCT/DE00/01751

(22) Anmeldetag: 30.05.2000

(87) Internationale Veröffentlichungsnummer:
WO 01/018370 (15.03.2001 Gazette 2001/11)

(54) **ARBEITSWEISE EINES VERBRENNUNGSMOTORS**

MODE OF OPERATION OF AN INTERNAL COMBUSTION ENGINE

MODE DE FONCTIONNEMENT D'UN MOTEUR A COMBUSTION INTERNE

(84) Benannte Vertragsstaaten:
AT BE CH CY DE DK ES FI FR GB GR IE IT LI LU MC NL PT SE

(30) Priorität: 03.09.1999 DE 19942064

(43) Veröffentlichungstag der Anmeldung:
03.04.2002 Patentblatt 2002/14

(73) Patentinhaber: Kassner, Lydia
40789 Monheim am Rhein (DE)

(72) Erfinder:
• Monitch, Anton
Troitsk, Gebiet Moskau (RU)
• Monitch, Evgeni
Troitsk, Gebiet Moskau (RU)

(56) Entgegenhaltungen:
EP-A- 0 661 424          WO-A-97/03279
DE-A- 19 601 062         DE-U- 9 001 381
US-A- 5 924 411

**Beschreibung**

*Technik*

Die Erfindung bezieht sich auf Kolben-, Rotor- und Rotorkolben-Verbrennungsmotoren mit der Verdichtung des Kraftstoff-Luft-Gemisches.

*Der bisherige Technikstand*

Die bis jetzt bekannten Verbrennungsmotoren unterteilen sich im Bezug auf das Zündungsprinzip auf Motoren mit Selbstzündung als Folge der Dieselverdichtung (1) und Motoren mit Funkenzündung (2). Solche Motoren unterscheiden sich auch in der Art des Kraftstoffs. In den Motoren mit Funkenzündung werden Benzinfraktionen in einigen Fällen leichte Kohlenwasserstoffe (Erdgas, Propan-Butan) und in den Dieselmotoren werden Solarölfraktionen verwendet.

Die Selbstzündung des Kraftstoffes im Dieselmotor wird mit der Luftverdichtung durch die Kolbenbewegung nach oben und der Lufterwärmung durch die polytrope Verdichtung mit der darauffolgenden Einspritzung des flüssigen Kraftstoffes am Ende des Verdichtungstaktes in der Nähe des "höchsten Totpunktes im Drehungswinkel der Kurbelwelle" (HTP) erzeugt. Der Verdichtungsgrad der Luftladung $\varepsilon$ und die Kraftstoffzusammensetzung sind so zusammengebracht weden, dass die Induktionszeit $\mathbf{T}_{\Sigma}$, d.h. die Selbstzündungs-Verzögerung für diesen Kraftstoff, einen kleinen Teil der Arbeitszyklus-Zeit des Motors ausmacht. Die Kraftstoffeinspritzung wird vor dem HTP vorgenommen und wird sowohl vor dem als auch nach dem HTP zu Ende gebracht. Innerhalb der Induktionszeit $\mathbf{T}_{\Sigma}$ finden nach dem Beginn der Kraftstoffeinspritzung physikalische Vorgänge der Kraftstoffzerstäubung in der verdichteten und erwärmten Luft, Vermischung und Teilverdampfung der Kraftstoff-Tropfen statt, sowie entwickeln sich chemische Vorflammenreaktionen der Kraftsroff-Oxidation. Am Ende dieser Periode entstehen die ersten Selbstzündungsherden und die neuen dazugekommenen Kraftstoffporzionen werden mit bereits brennenden Gasen vermischt und entflammt.

Um eine hocheffektive Verbrennung in Dieselmotoren zu gewährleisten, welche innerhalb einer breiten Palette von Geschwindigkeiten und Belastungen sowie mit schlecht zündenden oder verdampfenden Kraftstoffen eingesetzt werden, sind spezielle Maßnahmen zwecks einer normalen Gemischbildung und Zündung notwendig. Das ist ein schwer zu lösendes Problem und obwohl Dieselmotore mit einem hohen Luftüberschuß arbeiten, ist es oft nicht möglich, eine nicht vollständige Kraftstoffverbrennung bis zur Rußbildung zu vermeiden. Das ist ein Nachteil von Dieselmotoren.

In den bekannten Verbrennungsmotoren mit Funkenzündung wird das vorher vorbereitete Kraftstoff-Luft-Gemisch durch den Kolbenhub nach oben verdichtet und danach mittels Elektrofunken in der Nähe von HTP gezündet. Während der Verbrennung des Kraftstoff-Luft-Gemisches erhöhen sich die Temperatur und der Druck des Gases im Zylinder. Während der Gasdehnung und Kolbenbewegung nach unten wird nützliche Arbeit geleistet. Ähnliches geschieht in Rotor- und Rotorkolben-Verbrennungsmotoren.

Die Arbeitsweise des Motors mit Funkenzündung ist in deren technischen Ausführung am besten der Erfindung ähnlich und wurde als Prototyp gewählt.

*Beschreibung des Prototyps*

Die maximale von einem Motor zu entwickelnde Leistung wird unter maximaler Geschwindigkeit der Flammenausbreitung und Wärmefreisetzungsintensität erreicht, welche aufbereiteten Gemischen mit $\alpha$ = 0,85-0,9 entsprechen, wo $\alpha$ als Faktor für Luftüberschuß auftrift und dem Verhältnis zwischen der Luftmenge im Kraftstoff-Luft-Gemisch und der theoretischen für die volle Verbrennung notwendigen Luftmenge, d.h. entsprechend dem stöchiometrischen Verhältnis gleich ist.

Bei der Magerung des Kraftstoff-Luft-Gemisches bis oberhalb einiger Grenzwerten, welche von jeweiliger Motorkonstruktion, Motorbelastung und dem Verdichtungsgrad abhängig sind, entwickelt sich die Verbrennung in den Arbeits-Reihenzyklen unterschiedlich, was mit der Bedingungsverschlechterung der Funkenbildung in mageren Gemischen und Flammenausbreitung in solchen Gemischen zusammenhängt. Der Motor arbeitet instabil.

Bei der Verminderung der Motorbelastung durch die Drosselung vermindert sich der Anfangs- und Endverdichtungsdruck und erhöht sich der Verdünnungsgrad des Kraftstoff-Luft-Gemisches mit Restgasen, was auch zu einer wesentlichen Verschlechterung der Funkenzündbedingungen und Bildung einer Anfangs-Verbrennungsstätte führt. Die Verbrennung wird weniger stabil. Eine stabilere Firikenzündung wird bei der Gemischaufbereitung bis zu $\alpha$**=0,8-0,85** gewährleistet. Dabei wird aber eine Zeitausdehnung der Verbrennung beobachtet. Dieser instabiler Verbrennungsverlauf innerhalb niedriger Belastungen und die daraus resultierende Gemischaufbereitung sind die Hauptnachteile der Funkenzündmotoren. Diese Nachteile haben als Folge Erhöhungen des Kraftstoffverbrauches und des Anteils von CO und nicht vollständig abgebrannten Kohlenwasserstoffen $C_mH_n$ in den Abgasen.

Mit der Erhöhung des Verdichtungsgrades $\varepsilon$ verbessern sich die Verbrennungsbedingungen des Kraftstoff-Luft-Gemisches und erhöhen sich dementsprechend thermodynamischer Faktor (Wirkungsgrad), Wirtschaftlichkeit und Leistung des Motors.

Die Erhöhung aber des Verdichtungsgrades bis oberhalb eines bestimmten Wertes wird durch eine Detonationsbildung begrenzt, d.h. durch eine solche Störung der normalen Verpuffungsverbrennung des Kraftstoff-Luft-Gemisches, währenddessen eine explosionsartige Selbstzündung von Restteilen des Kraftgemisches stattfindet. Bei der intensiven Detonation sinkt die Motorleistung und entsteht schwarzer Rauch in den Abgasen, es können auch Zerstörungen an den Kolben- und Schubkurbelteilen auftreten.

Ein anderes wesentliches Parameter, das die Detonationsneigung darstellt, ist die zu verwendende Kraftstoffart. Die Antidetonationsbeständigkeit des Kraftstoffes wird von der Oktanzahl gekennzeichnet. Je höher die Oktanzahl, desto besser passt der Kraftstoff zu dem Funkenzündmotor, desto größerer Verdichtungsgrad im Motor ohne Detonationsrisiko verwirklicht werden kann. Der Einsatz von hochkondensierten Isoparaffinen als Kraftstoff machte es möglich, daß der Verdichtungsgrad in solchen Motoren bis zu $\varepsilon$=10-11 erreicht wurde, aber eine weitere Entwicklung fordert Einsatz von unkonventionellen und teueren Kraftstoffen.

Es ist bekannt, daß der Selbstzündungsprozess von Alkanen und verwandten Kraftstoffen, d.h. von solchen, die in Verbrennungsmotoren eingesetzt werden, ein mehrstufiger Prozess ist, der drei Folgestufen mit der Bildung von sogenannten Kalt-, Blau- und Heißflammen verläuft (3, 4). Die Kalt- und Blauflammen sind Stufen mit Teilausscheidungen der chemischen Enthalpie (ca. 3 % bei der Kaltflamme und ca. 30 % bei der Blauflamme). Aber im Verlauf jeder der Stufen werden Bedingungen zum Ablauf der nächsten Stufe der Selbstzündung geschaffen. In der Endstufe der Selbstzündung, in der Heißflammenstufe, wird bei der stöchiometrischen Zusammensetzung des Kraftstoff-Luft-Gemisches der Restteil der chemischen Enthalpie ausgeschieden.

Die typische Besonderheit eines solchen Prozesses ist die Induktionszeit jeder Stufe, deren Laufzeit von der Intensität der vorherigen Stufe abhängig ist. Es sieht so aus, als ob der Prozess sich innerhalb einer bestimmten Phase stabilisiert, die die Induktionszeit für die nächste Stufe darstellt, und danach ein scharfer Übergang zur neuen Stufe erfolgt. Daher gleicht die gesamte Induktionszeit der Selbstzündung der Summe der Induktionszeiten jeder Prozess-Stufe:

$$T_\Sigma = T_1 + T_2 + T_3 \ ,$$

wobei

    $T_1$    - die Induktionszeit der Kaltflamme darstellt,

    $T_1$    - die Induktionszeit der Blauflamme darstellt,

    $T_1$    - die Induktionszeit der Heißflamme darstellt.

In der Regel ist $T_1$ klein, daher wird die Selbstzündung als Zweistufenprozess mit einer Verzögerung

dargestellt:

$$T_\Sigma = T_{cf} + T_{hf},$$

wobei

$$T_{ch} = T_1 ; \ T_{hf} = T_2 + T_3 .$$

Aus dem Bild 1 ist es ersichtlich, daß in den Verbrennungsmotoren mit der Verdichtung des Kraftstoff-Luft-Gemisches die Werte $P_c$ und $T_c$ am Ende des Verdichtungstaktes, die sich auf der V-Kurve befinden, in den Verdichtungsbereich des Kraftstoff-Luft-Gemisches und der Anfangsdruckwerte $P_0$ bis zu $\varepsilon = 16-18$ und $P_0$=0,9 und höher gelangen.

Dies zeigt, daß während des Verdichtungstaktes in den Verbrennungsmotoren mit Funkenzündung ein Prozess der mehrstufigen Selbszündung infolge der Verdichtung beginnt.

Dennoch kann dieser Prozess die Endstufe der Selbstzündung - die Stufe der Heißflamme, unter den Bedingungen des Arbeitszyklus des Verbrennungsmotors wegen reichlich langen Induktionszeiten nicht erreichen, die charakteristisch für verwendbare Kraftstoffarten und $P_c$ und $T_c$ sind. Aus diesem Grunde wird zwecks Realisierung des Arbeitszyklus der Verbrennungsmotore, der die vollständige Verbrennung des Kraftstoff-Luft-Gemisches erfordert, die Haupteigenschaft der Heißflamme benutzt, d.h. die spontane Ausbreitung im Heißgemisch, wenn in diesem mit Hilfe einer Zündvorrichtung, z.B. mittels E-Funke, ein Anfangs-Zündherd entsteht.

Der normale Ablauf der Verbrennung des Kraftstoff-Luft-Gemisches, genannt Deflagration und mit einer relativ langsamen Flammenausbreitung verbunden, wird dadurch gekennzeichnet, daß während des Prozesses noch nicht von der Flamme erfasste Bereiche und solche mit bereits verbranntem Gemische existieren, und die Grenze dazwischen - die Flammenfront ist, d.h. die enge Zone, in der in diesem Augenblick die Verbrennung des Kraftstoffes stattfindet. Parallel zu der normalen Verbrennung des Kraftstoff-Luft-Gemisches werden in den noch nicht von der Flamme erfassten Raumteilen die chemischen Reaktionen der sich entwickelten mehrstufigen Selbstzündung fortgesetzt. Während der normalen Kraftstoff-Luft-Gemisch-Verbrennung erfolgt eine intensive Temperatur- und Drucksteigerung, der Prozess der mehrstufigen Selbstzündung in den nicht verbrannten Raumteilen wird intensiviert. Unter einigen Bedingungen kann sich der Ablauf bis zur Stufe der explosiven Zersetzung von Hyperoxyden und weiter bis zum Aufflammen der Blauflamme steigern, der sich immer in die Richtung der Heißflammenfront und hohen Temperaturen entwickelt. Da die Entwicklung der Blauflamme im bereits in der Kaltflammenstufe vorbereiteten Medium geschieht, und bei höheren Temperaturen die Oxidationsreaktionen von Aldehyden beschleunigt werden, findet die chemische Beschleunigung der Blauflamme in die Temperaturgradient-Richtung statt, entstehen Gasenmassenströme und Druckwellen, die als "Klopfen" wahrgenommen und Detonation genannt werden. Da in den Blauflammen nur ein Teil der chemischen Enthalpie des Kraftstoffes (ca. 0,3) ausgeschieden wird, und die das Aufflammen der Blauflamme begleitenden Gasenmassenströme die Heißflammenfront zerstören, wird die normale Verbrennung unterbrochen. Aus diesem Grunde kann der merkliche Teil des Kraftstoffes nicht zu den Endverbrennungsprodukten verbrennen, sinkt die Leistung des Motors und befindet sich in den Abgasen ein hoher Anteil an toxischen Produkten nicht vollständiger Verbrennung des Kraftstoff-Luft-Gemisches.

Die Verbrennung des Kraftstoff-Luft-Gemisches mittels Selbstausbreitung der Flammenfront in der Verbrennungskammer vor dem Hintergrund der sich entwickelten mehrstufigen Niedrigtemperatur-Selbstzündung stellt so gesehen den Grund für die Detonation und Begrenzung des Verdichtungsgrades in Verbrennungsmotoren mit Funkenzündung dar, was, wie bereits erwähnt, eine Steigerung des Wirkungsgrades, der Leistung und Wirtschaftlichkeit nicht möglich macht.

### Die Erfindung

Als technisches Ergebnis der Erfindung wird die mögliche Erhöhung des zulässigen Verdichtungsgrades bis zu den Werten $\varepsilon > 11$ dargestellt, die Steigerungen des thermodynamischen Wirkungsgrades, der Leistung und Wirtschaftlichkeit des Motors ermöglicht, sowie den Einsatz von mageren Kraftstoff-Luft-Gemischen, deren vollständige Verbrennung in allen Arbeitsbereichen, einschließlich auch unter niedrigeren Belastungen, und als Folge dieser vollständigen Verbrennung-Erhöhungen von Drehmomenten in Motoren, Kraftstoffersparungen und Senkungen der Schadstoffemissionen in den Abgasen.

Dies wird durch die Vervollkommnung der bekannten Arbeitsweise eines Verbrennungsmotors erreicht, indem die Verdichtung des Kraftstoff-Luft-Gemisches mittels des Kolbenhubes nach oben mit der Bildung von metastabilen Zwischenprodukten der Kohlenwasserstoffoxidation verwirklicht und die Gemischverbrennung in der Verbrennungskammer in der Nähe des höchsten Totpunktes in dem Drehungswinkel der Kurbelwelle zwecks Vollziehung der nützlichen Arbeit bei der Kolbenbewegung nach unten gewährleistet wird.

Die Vervollkommnung besteht darin, daß die Kraftstoff-Luft-Gemisch-Verbrennung als Ergebnis der Vollziehung der mehrstufigen Niedrigtemperatur-Selbstzündung bis zur Heißflammenstufe infolge der Zerstörung der metastabilen Zwischenprodukte der Kohlenwasserstoffoxidation durch eine Energieeinwirkung erfolgt, deren Energiewert nicht niedriger als Aktivationsenergiewert $E_a$ der Zersetzungsreaktion dieser Zwischenprodukte mit der Bildung von aktiven Radikalen liegt. Als Energieeinwirkung kann eine elektromagnetische Strahlungsströmung gewählt werden. Die Energieeinwirkung kann auch durch eine Druckwelle erfolgen, die mittels Mikrowellen-, Laser- oder Funkendurchschlag in die Gasstrecke in der Verbrennungskammer mit dem Energiewert verursacht wird, der oberhalb des minimalen Energiegrenzwertes liegt, der für die Bildung der stationären Detonationswelle der Kaltflammenstufe notwendig ist, und unterhalb des oberen kritischen Energiewertes liegt, der den Prozess aus dem Bereich der mehrstufigen Niedrigtemperatur-Selbstzündung in den Bereich der einstufigen Hochtemperatur-Selbstzündung überführt.

Als Alternative kann die Energieeinwirkung mit Hilfe einer Druckwelle erfolgen, die durch Mikrowellen-, Laser- oder Funkendurchschlag in die Gasstrecke im Kraftstoff-Luft-Gemisch mit dem Energiewert verursacht wird, der unterhalb des minimalen Energiegrenzwertes liegt, der zwecks Schaffung der stationären Detonationswelle der Kaltflammenstufe notwendig ist.

### Kurzbeschreibung der Zeichnungen

Die Erfindung wird im weiteren anhand eines konkreten Realisierungsbeispiels und der Zeichnungen, Bild 1, 2 erklärt.

Auf dem Bild 1 werden Bereichsgrenzen von unterschiedlichen Selbstzündungsarten dargestellt: I - einstufiger Hochtemperatur-Selbstzündungsbereich; II - mehrstufiger Niedrigtemperatur-Selbstzündungsbereich; III - Übergangsbereich; IV - Kaltflammen-Bereich; V - $P_c$- und $T_c$-Parameter-Linie am Ende des Verdichtungstakts des stöchiometrischen Kraftstoff-Luft-Gemisches mit dem Polytropen-Wert $y = 1,35$.

Auf dem Bild 2 sind Änderungen der Parameter $P_c'$ und $T_c'$ in der Anfangsphase der Entwicklung des Arbeitsprozesses gemäß der Erfindung.

### Die beste Realisierungsvariante der Erfindung

Der Verbrennungsmotor arbeitet wie folgt. Als Folge des Kolbenhubes nach oben erfolgt die Verdichtung des Kraftstoff-Luft-Gemisches. Die Parameter des Prozesses $P_c$, $T_c$ $\varepsilon$ und Oktanzahl des Kraftstoffes sind dabei so gewählt, dass die Induktionszeit der Kaltflamme $T$ den Verdichtungstakt bei allen zulässigen Arbeitsweisen des Verbrennungsmotors überdauert. Infolge der Verdichtung und Erwärmung des Kraftstoff-Luft-Gemisches bilden und sammeln sich die primären Produkte der nichtvollständigen Verbrennung von Kohlenwasserstofen: Peroxyde, Aldehyden, Diketone u.a. Die Verbrennung des Kraftstoff-Luft-Gemisches in der Verbrennungskammer wird als Überführung der mehrstufigen Selbstzündung in die Stufe der Heißflamme aufgrund der Molekulenzerstörung der gesammelten metastabilen Zwischenprodukte der Kohlenwasserstoffoxidation verwirklicht. Diese Zerstörung wird durch eine Energieeinwirkung im Zeitpunkt synchron mit dem höchsten Totpunkt erreicht, und der Wert dieser Energieeinwirkung ist nicht weniger als der maximale Wert der Aktivationsenergie $E_a$ der Zersetzungsreaktionen der Zwischenprodukte mit der Bildung von aktiven Radikalen, der immer unterhalb des Energiegrenzwertes $E_t$ der Entwicklung der stationären Detonation in der Kaltflammenphase liegt.

### *Realisierungsbeispiel*

Als Beispiel wird der Ablauf der mehrstufigen Niedrigtemperatur-Selbstzündung mit der Zerstörung der Zwischenprodukte der Kohlenwasserstoffoxidation im Falle von Peroxyden als Zwischenprodukt beschrieben. Aber genauso würden auch Beispiele mit anderen Zwischenprodukten ablaufen, d.h. mit Aldehyden und Diketonen, die unter bestimmten Bedingungen z.B. in der Übergangsphase III, Bild 1, entstehen. Die Gesamtgeschwindigkeit eines komplizierten Ablaufs wird durch die langsamste Phase des Ablaufs bestimmt. Für die mehrstufige Selbstzündung von Alkanen und verwandten Produkten infolge der Verdichtung ist diese langsamste Phase die entartete Kettenverzweigung über Zwischenprodukte der Kohlenwasserstoffoxidation. Diese Kettenverzweigung wird von den aktiven Radikalen der Peroxydenzersetzung verursacht. Die Lebenszeit der Peroxyde $t_p$ ist von der Aktivationsenergie $E_a$ deren Zersetzungsreaktion und von den Außenbedingungenvom Druck $P$ und Temperatur $T$ abhängig. Für Reaktionen mit entarteter Kettenverzweigung übersteigt die durchschnittliche Lebenszeit von metastabilen Zwischenprodukten wesentlich die charakteristischen Ablaufzeiten von anderen elementaren Reaktionen aus den Reaktionsreihen der Kohlenwasserstoffoxidation. Dies führt zu der Anhäufung von Peroxyden im Kraftstoff-Luft-Gemisch bis zu einer kritischen Konzentration $N_M$, bei der die Zahl der Kettenverzweigungen für die notwendige Ablaufbeschleunigung ausreichend ist. Bis zu diesem Augenblick stabilisiert sich praktisch die Oxidationsbeschwindigkeit auf einer bestimmten Höhe und erhöht sich langsam, aber langsamer als es für die explosive Beschleunigung des Ablaufs und den Übergang zu der nächsten Selbstzündungsstufe notwendig wäre. Diese Phase bestimmt die Induktionszeit der Kaltflamme $T_{cf}$. So gesehen, ist die oben angeführte relative Stabilität der Peroxyde der Hauptgrund für die zurückhaltende Reaktionsentwicklung und den Übergang zur Selbstzündung.

Die Erfüllung der Bedingung $T_{cf} > T_c$, wobei $T_c$ die Taktdauer der Verdichtung des Arbeitszyklus des Verbrennungsmotors ist, bedeutet, dass die Konzentration von Peroxyden $N_c$ zu der Zeit der Beendigung der Heißgemischverdichtung kleiner einer kritischen Größe ist, bei der die spontane Zersetzung der Peroxyde stattfindet: $N_c < N_M$. Da diese Zeitphase der Induktionszeit der Kaltflamme entspricht, in der die Peroxydenanhäufung bis zu der kritischen Konzentration anwächst, ist es zwecks Entwicklung der Selbstzündung notwendig die Peroxydenmolekulen zu zerstören. Bei dieser Zerstörung verursachen die dabei in großen Mengen entstehenden freien Radikale die lawinenartige Beschleunigung der folgenden Reaktionen der Kohlenwasserstoffoxidation und führen die Selbstzündung in die zweite Stufe - die Kalfflammenstufe Die Kaltflammenreaktionen sind bei der Zerstörung der Peroxydenmolekulen sehr intensiv. Diese Ablaufphase, die die Induktionszeit der Blauflammenstufe darstellt, endet wesentlich schneller als der Ablauf ohne Zwangszerstörung der Peroxyde Die Induktionszeit der Blauflammenstufe wird genügend kurz werden und die Zeitverzögerung zwischen dem Augenblick der Peroxydenzerstörung und dem Erscheinen der Heißflamme wesentlich kürzer ausfällt als die Dauer des Verdichtungstaktes. Auf diese Weise erlaubt die Zerstörung von Peroxydenmolekulen in der Nähe zum aber vor dem höchsten Totpunkt die Selbstzündung praktisch im höchsten Totpunkt zu beenden.

Die intensive und ausreichend vollstäwdige Zerstörung von Peroxydenmolekulen kann unter unterschiedlichen Energieeinwirkungen verwirklicht werden, zum Beispiel mittels elektromagnetischer Strahlung, welche die Photospaltung der Molekule erregt.

Die Zerstörung von Peroxyden kann auch durch eine Druckwelle im Kraftstoff-Luft-Gemisch verursacht werden. Die Druckwelle selbst kann auch unterschiedlich ausgelöst werden, z.B. mittels eines Mikrowellen-, Laser- oder Funkendurchschlag in die Gasstrecke in der Verbrennungskammer. Die Druckwellenenergie muss in diesem Fall für die Peroxydenzerstörung im GrenzVolumen $V_t$ ausreichend sein. Dann setzen die exothermischen Reaktionen im Volumen $V_t$ ausreichende für die Speisung der Druckwelle und ihre Ausbreitung im Kraftstoff-Luft-Gemisch Energiemenge frei. Das Existieren des GrenzVolumens $V_t$ wird dadurch erklärt, dass die für die Molekulenspaltung notwendige Erregung von Schwingungspegeln der Peroxydenmolekule nur als Ergebnis von mehreren Molekulenzusammenstößen möglich ist.

Wenn der Energiewert der Druckwelle unterhalb des für die Zerstörung von Zwischenprodukten im GrenzVolumen $V_t$ notwendigen liegt, dann kann sich der Zerstörungsablauf nicht in dem vollen Volumen des Kraftstoff-Luft-Gemisches ausbreiten, sondern wird nur im Volumen $V_0 < V_t$ lokalisiert. Dabei entwickelt sich schnell die mehrstufige Selbstzündung im Volumen $V_0$ zur Heißflammenphase. Dieser Volumen ist der Anfangspunkt der Zündung des Kraftstoff-Luft-Gemisches mit der darauffolgenden Heißflammenausbreitung im RestVolumen. Dieser Prozess mit der Teil-Selbstzündung des Kraftstoff-Luft-Gemisches mit der darauffolgenden Deflagrationsverbrennung dessen RestVolumens erlaubt keine vollständige Realisierung der Vorteile des vorgeschlagenen Verfahrens, aber gewährleistet eine wesentliche positive Wirkung im Vergleich mit dem Prototyp.

Der Grenzwert der Druckwelle $E_t$ wird geschätzt. Nach dem Passieren der Druckwellenfront erregen sich praktisch sofort Translations- und Rotations-Freiheitsgrade. Unter den zu betrachtenden Bedingungen sind für die Erregung der Schwingungspegeln ca. $10^6$ Zusammenstöße notwendig, für die wiederum ca. $10^{-5}$ s notwendig sind. Erst nach Ablauf dieser Zeit kommt die Spaltung der Hyperoxydmolekule und die Energiefreisetzung in den chemischen Reaktionen. Während dieser Zeit breitet sich die Druckwelle in einer Entfernung $r_t$=ca. $4 \cdot 10^{-3}$ m aus. Für einen symmetrischen sphärischen Fall der Dmckweltenausbreitung beträgt der Volumen $V_t$ $4_{TTT_t}/3$ und Gasgewicht in diesem Volumen - ca. $(0,3-0,8)10^{-2}$ g (in Abhängigkeit von P). Der Energiewert für die Erwärmung dieses Gasvolumens bis zu $\Delta T$=ca.50°C beträgt 10-30 Millijoule, was die Schätzung des unteren Energiewertes der Druckwelle $E_t$ ergibt. Im Falle der Begrenzung des Ausbreitungsraums der Druckwelle, z.B. durch die Fokussierung, kann der Wert $E_t$ fast auf eine Größenordnung gesenkt werden. Daraus ergibt sich $E_t'$= ca. 2-5 Millijoule. Der Prozess, in dem die Druckwelle Energiefreisetzungsreaktionen verursacht, und diese Energiefreisetzung die Druckwelle speist, so das die Verluste der Verdichtung und zusätzlichen Erwärmung des Mediums der Druckwellenausbreitung kompensiert werden, stellt die Detonationswelle dar.

In dem zu betrachtenden Fall muss die Druckwelle so sein, dass kein Übergang der Parameter $P_c'$; $T_c'$ aus dem Bereich der mehrstufigen Selbstzündung in den Bereich 1 (Bild 1) der einstufigen Hochtemperaturzündung verursacht werden kann. Dies hervorruft Begrenzungen für die Amplitude der Druckwelle, z.B. für das Verhältnis $P_f/P_c$, wo $P_f$ Gasdruck in der Druckwellenfront und $P_c$- Gasdruck vor der Druckwellenfront darstellt.

Um die stationäre Detonationswelle entstehen zu lassen, sind die Energieverluste der Druckwelle durch die exothermischen Reaktionen zu kompensieren. In der Kaltflammenstufe werden ca. 3 % der chemischen Enthalpie des Kraftstoffes freigesetzt, was einer Temperaturerhöhung im Kraftstoff-Luft-Gemisch um ca.50°C entspricht. D.h., dass die Temperaturerhöhung in der stationären Detonationswellen-Front ca. 50°C nicht überschreiten kann. Für Temperaturen $T_c$, die für den zu betrachtenden Fall charakteristisch sind, entspricht solche Temperaturerhöhung dem Verhältnis $P_f/P_c$ = ca. 1,4. Diese Druckwelle ist schwach und kann keine nennenswerte Gasenmassenströme hervorrufen.

Der Ablauf wird mit Hilfe des Bildes 2 erklärt. In diesem Bild ist das Verhältnis der Werte $P_c$; $T_c$ am Ende des Verdichtungstaktes des Verbrennungsmotors mit der stöchiometrischen Zusammensetzung des Kraftstoff-Luft-Gemisches (Polytropenwert $y$ = 1,35) dargestellt. Nehmen wir an, dass die Werte $P_c^A$ und $T_c^A$ beim gegebenen Verdichtungsgrad $\varepsilon$ und Anfangsdruck $P_0$, $C_0$ dem Punkt **A** entsprechen, dann werden die Werte $P_c^c$ und $T_c^c$ in der Druckwellenfront dem Punkt **C** entsprechen. Der Punkt C befindet sich in der Temperatur höher als Punkt B, weil die Temperatur in der Druckwellenfront bei der "Druckverdichtung" höher liegt, als solche unter der polytropen Verdichtung bis dem gleichen Druckwert. Da die Druckwelle schwach ist, wird nach dem Durchgang ihrer Front der Druck bis zu ca. $P_c$ fallen und die Temperatur um ca. $\Delta T$ höher als die Anfangstemperatur liegt (Punkt **D** im Bild 2).

Die Erfüllung der oben genannten Begrenzungen für $\Delta T$ und $\Delta P$ führt dazu, dass in der Detonationswellenfront die Kaltflammenstufe realisiert wird, und der Übergang zu der Blauflamen- und Heißflammenstufe zwar ausreichend rasch erfolgt, aber von der Zeit des Passierens der Druckwellenfront durch so eine Zeitdauer getrennt wird, dass diese Abläufe keinen Einfluß auf die Detonationswelle haben. Die Detonationswelle überführt die Selbstzündung sozusagen in eine neue Stufe, wo diese Selbstzündung sich unter veränderten Bedingungen entwickelt und zwar: $P_c'= P_c$; $T_c'= T_c + \Delta T$; dazu noch "eine große Zahl der Kettenreaktionsverzweigungen". Man kann sagen: es erfolgt die Peroxyd-Detonation im Kraftstoff-Luft-Gemische. Die sich infolge der Peroxydenzersetzung bildenden aktiven Radikale verursachen neue Verzweigungen der chemischen Reaktionen zur Bildung von aktiven Radikalen aus Peroxyden und Aldehyden. Es finden Fragmentierungsprozesse der Kohlenwasserstoffmolekule statt, es bilden sich Formaldehyd und die Wärme bis zu der Konzentration, die für den Übergang in die nächste Prozessphase notwendig ist. Als Ergebnis geht die Selbstzündung rasch in die nächste Stufe über und endet in der Heißflammenstufe, in der die restliche chemische Enthalpie des Kraftstoff-Luft-Gemisches freigesetzt wird.

Die oben beschriebenen Abläufe wiederholen sich der Reihe nach in allen Zylindern des Verbrennungsmotors.

### *Industrieanwendung*

Die vorgeschlagene Erfindung gewährleistet die mit der Phase des höchsten Totpunktes synchronisierte Selbstzündung des Kraftstoff-Luft-Gemisches aus Benzin- und schwereren Kraftstoff-Fraktionen, sowie anderer Kraftstoffarten mit mehrstufiger Selbstzündung, sowie eine Verbrennung des Kraftstoff-Luft-Gemisches ohne Heißflammen-Frontausbreitung. Dies erlaubt die Erhöhung des zulässigen Verdichtungsgrades $\varepsilon$ bis zu Werten $\varepsilon$ **> 11**, was zu den oben aufgeführten Vorteilen im Vergleich zum Prototyp führt.

### *Quellennachweis*

1. Levis B, Elbe G. Combustion, Flames and Explosions of Gases
New York - London, Academic Press, 1961

2. Automotoren
Redation Khovakh M.S. M., Maschinenbau 1977

3. Rogener H.Z. Elektrochem., 53, 389 (1949)

4. Sokolik A.C. Selbstzündung, Flamme und Detonation in Gasen
Ausgabe der Akademie der Wissenschaften der UdSSR, S. 120-143 (1960)

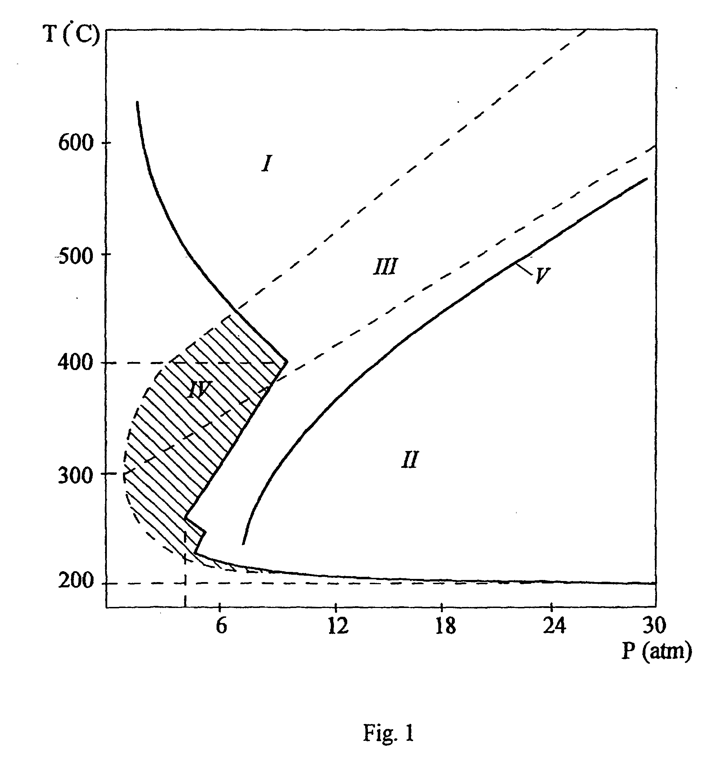

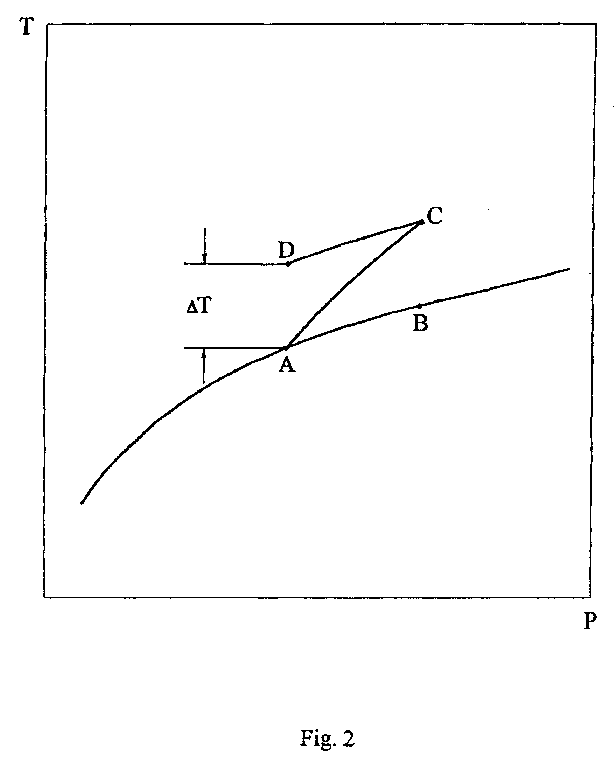

## Patentansprüche

1. **Brennverfahren** eines Verbrennungsmotors, bei dem durch Kolbenbewegungen die Verdichtung des Kraftstoff-Luft-Gemisches auf der Basis von Alkanen und verwandten Kraftstoffen mit der Bildung von metastabilen Zwischenprodukten der Kohlenwasserstoffoxidation als Ergebnis des beginnenden Prozesses der mehrstufigen Niedrigtemperatur-Selbstentflammung erfolgt und die Gemischverbrennung in der Verbrennungskammer in der Nähe des Totpunktes im Drehungswinkel der Kurbelwelle zwecks Vollziehung der nützlichen Arbeit bei der Kolbenbewegung nach unten gewährleistet,
**dadurch gekennzeichnet dass**,
die Parameter des Prozesses so gewählt sind, dass die Induktionszeit der Kaltflammen den Verdichtungstakt bei allen zulässigen Arbeitsweisen des Verbrennungsmotors überdauert und die Kraftstoff-Luft-Gemisch-Verbrennung durch die Vollendung des Prozesses der mehrstufigen Niedrigtemperatur-Selbstentflammung bis zur Heissflammen-Stufe auf Kosten der Zerstörung von metastabilen Zwischenprodukten der Kohlenwasserstoffoxidation als Ergebnis der Energieeinwirkung verwirklicht wird, deren Grösse nicht niedriger als Aktivationsenergie $E_a$ der Zerstörungsreaktion dieser Zwischenprodukte mit der Bildung von aktiven Radikalten liegt und nicht höher ist als oberer kritischer Energiewert, der den Prozess als dem Bereich der mehrstufigen Niedrigtemperatur-Selbstentflammung in den Bereich der einstufigen Hochtemperatur-Selbstentflammung überführt.

2. **Brennverfahren** eines Verbrennungsmotors nach Anspruch 1 **dadurch gekennzeichnet, dass** als Energieeinwirkung elektromagnetische Strahlungsströmung eingesetzt wird.

3. **Brennverfahren** eines Verbrennungsmotors nach Anspruch 1 **dadurch gekennzeichnet, dass** die Energieeinwirkung mittels einer Druckwelle verwirklicht wird, die mit Hilfe eines Mikrowellen-, Laser- oder Funkendurchschlages in die Gasstrecke im Kraftstoff-Luft-Gemisch geschaffen wird.

## Claims

1. The mode of operation of an internal combustion engine, whereby fuel-air mixture compression is carried out on the basis of alkanes and related fuels by a piston upstroke, with the formation of metastable intermediate products of hydrocarbon oxidation during the beginning of the multi-stage low-temperature auto-ignition process and combustion of the mixture at the top-dead-center position so as to perform a useful operation during piston downstroke,
**characterized in that** the parameters of the process are picked so that the cold flame induction time exceeds compression stroke duration in all feasible operative conditions of an internal combustion engine, and combustion of fuel-air mixture is carried out without propagation of hot flame front by bringing the multi-stage low-temperature auto-ignition process to the hot flame stage throughout the whole volume of the combustion chamber owing to the decomposition of the metastable intermediate products of hydrocarbon oxidation under an energetic action, the value of which is not lower than the value of activation energy $E_a$ of the decomposition reaction of said intermediate products wherein active radicals are formed and not higher than critical energy, which brings the process from the area of low-temperature multi-stage auto-ignition to the area of single-stage high-temperature auto-ignition.

2. The mode of operation of an internal combustion engine according to Claim 1,
**characterized in that** an energetic action is realized by the electromagnetic radiation flux.

3. The mode of operation of an internal combustion engine according to Claim 1,
**characterized in that** an energetic action is realized by the shock wave arising due to microwave, laser or spark breakdown of gas gap in fuel-air mixture.

## Revendications

1. Mode de combustion d'un moteur à combustion interne en ce qui le mouvement de piston est réalisé par compression de mélange carburant-air à la base des alcanes et d'autres carburants du même groupe avec génération des demi-produits d'oxydation des carbures d'hydrogène métastables àu cours de processus commencé d'inflammation spontanée de basse température de mélange carburé à plusieurs stades et sa combustion tout près du point mort supérieur le long de l'agle de tournantde l'arbre coudé pour accomplissement àu cours de mouvement du piston en bas, **caractérisé en ce**

**que** l'on trouve les paramètres de processus de la sorte que le temps d'induction de la flamme froide ne dépasse pas la durée de temps de compression au cours des tous les régimes permissibles de marche d'un moteur à combustion de mélange carburant-air on réalise par poussage le processus d'inflamation spontanée de basse température jusqu'`àu stade de la flamme chaude par suite de déstruction des demi-produits métastable d'oxydation des carbures d'hydrogène à cause de l'action énergétique, sa valeur est pas moins d'énergie d'activation $E_a$ de la réaction de déstruction des demi-produits mentionnés avec la formation des radicaux actifs et ne dépasse pas l'énergie critique orientant le processus de domaine de l'ignition spontanée en basse température dans le domaine de l'ignition à un stade à haute température.

2. Mode de combustion d'un moteur a combustion interne selon revendication 1., **caractérisé en ce que** l'action énergétique est réalisée par le flux de force électromagnétique.

3. Mode de combustion d'un moteur à combustion interne selon revendicanion 1., **caractérisé en ce que** l'action énergétique est réalisée par l'onde de choc qui est résultée de décharge d'étincelles, de décharge microondulée ou bien de laser.

Fig. 1

Fig. 2